# EUROPEAN PATENT APPLICATION

(11) **EP 2 445 084 A2**
(43) Date of publication of application: **25.04.2012**
(21) Application number: 11181320.0
(22) Date of filing: 15.09.2011
(51) Int. Cl.: H02K 1/14

(54) **Motor stator structure, motor, pump, and pump-driven device**

(30) Priority: 25.10.2010 JP 2010238511
(71) Applicant: Panasonic Corporation, Osaka 571-8501 (JP)
(72) Inventor: Hashimoto, Toshiharu, Kadoma-shi, Osaka 571-8686 (JP); Suematsu, Shinji, Kadoma-shi, Osaka 571-8686 (JP); Nunomura, Mahito, Kadoma-shi, Osaka 571-8686 (JP)
(74) Representative: Appelt, Christian W.

(57) **Abstract**

A motor stator structure includes: a yoke portion 32 having an annular or polygonal shape located substantially around an output shaft 11; a tooth portion 33 protruding radially from inner or outer periphery of the yoke portion 32; a magnetic pole portion 34 provided at an end of the tooth portion 33; and a coil portion 31 wound around the tooth portion 33. In the motor stator structure, an axial end portion 33a of the tooth portion 33 has a step portion 35 so as to have a narrower circumferential width.

## Description

### CROSS REFERENCE TO RELATED APPLICATIONS

This application is based upon and claims the benefit of priority from prior Japanese Patent Application P2010-238511 filed on October 25,2010; the entire contents of which are incorporated by reference herein.

### BACKGROUND OF THE INVENTION

The present invention relates to a motor stator structure, a motor including the stator structure, a pump including the motor as a driving source, and a pump-driven device including the pump.

In a known conventional motor stator structure, for example, as disclosed in Japanese Patent Laid-open Publication No. 2004-328971, an arc-shaped magnetic member protruding in the axial direction is provided at an axial end portion of a tooth portion around which a coil is wound. This allows the coil to be easily wound around the tooth portion.

### SUMMARY OF THE INVENTION

However, in the above-described stator structure, it is necessary to use a material such as a dust core or metallic glass for forming the arc-shaped magnetic member, thus increasing the manufacturing cost.

An object of the present invention is to provide a motor stator structure capable of facilitating winding a coil with manufacturing cost prevented from increasing, a motor including the stator structure, and a pump including the motor as the driving source, and a pump-driven device including the pump.

In order to achieve the aforementioned object, a motor stator structure of the invention includes: a yoke portion having an annular or polygonal shape located substantially around an output shaft; a tooth portion protruding radially from inner or outer periphery of the yoke portion; a magnetic pole portion provided at an end of the tooth portion; and a coil portion wound around the tooth portion, in which an axial end portion of the tooth portion has a step portion so as to have a narrower circumferential width.

According to the motor stator structure of the invention, the axial end portion of the tooth portion has the step portion so as to have a narrower circumferential width. Accordingly, the operation of winding a coil can be easily performed while the manufacturing cost is prevented from increasing.

### BRIEF DESCRIPTION OF THE DRAWINGS

Fig. 1 is a cross-sectional view schematically showing a pump to which a motor stator structure according to a first embodiment of the present invention is applied.
Figs. 2 (a) and 2 (b) are a plan view and a perspective view showing the stator structure in Fig. 1, respectively.
Fig. 3 is a perspective view showing a stator core shown in Fig. 2(b) with a coil wound therearound.
Fig. 4 is a perspective view showing a first modification of the stator structure shown in Fig. 1.
Fig. 5 is a perspective view showing a second modification of the stator structure shown in Fig. 1.
Figs. 6 (a) and 6 (b) are a plan view and a perspective view showing a third modification of the stator structure shown in Fig. 1, respectively.
Fig. 7 is a cross-sectional view schematically showing an internal structure of a dishwasher according to a second embodiment of the present invention.

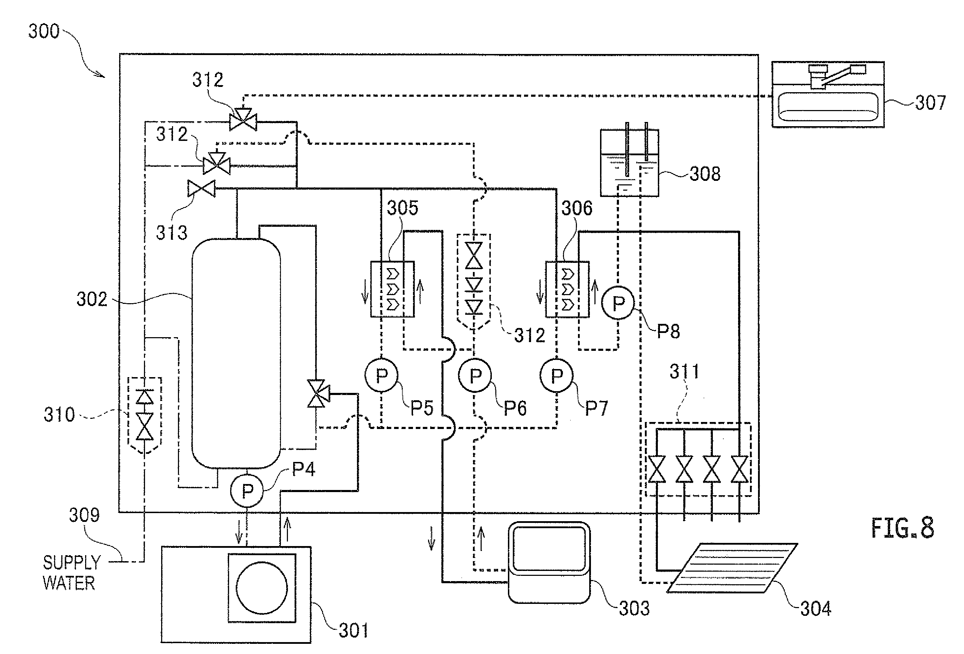

Fig. 8 is a system view schematically showing a water heater system according to a third embodiment of the present invention.

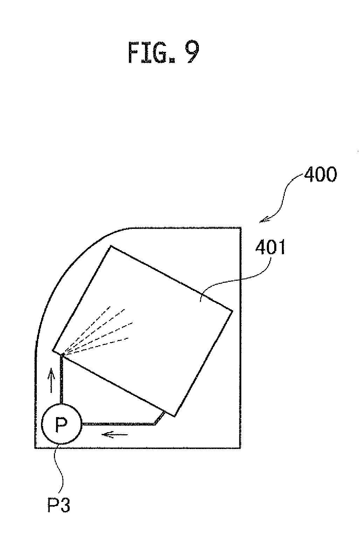

Fig. 9 is a cross-sectional view schematically showing an internal structure of a washing machine according to a fourth embodiment of the present invention.

### DETAILED DESCRIPTION OF THE PREFERRED EMBODIMENTS

Hereinafter, a description is given of embodiments of the present invention in detail with reference to the drawings. The following plural embodiments include same constituent elements. The same constituent elements are given same reference numerals in the following description, and the redundant description is omitted.

### [First Embodiment]

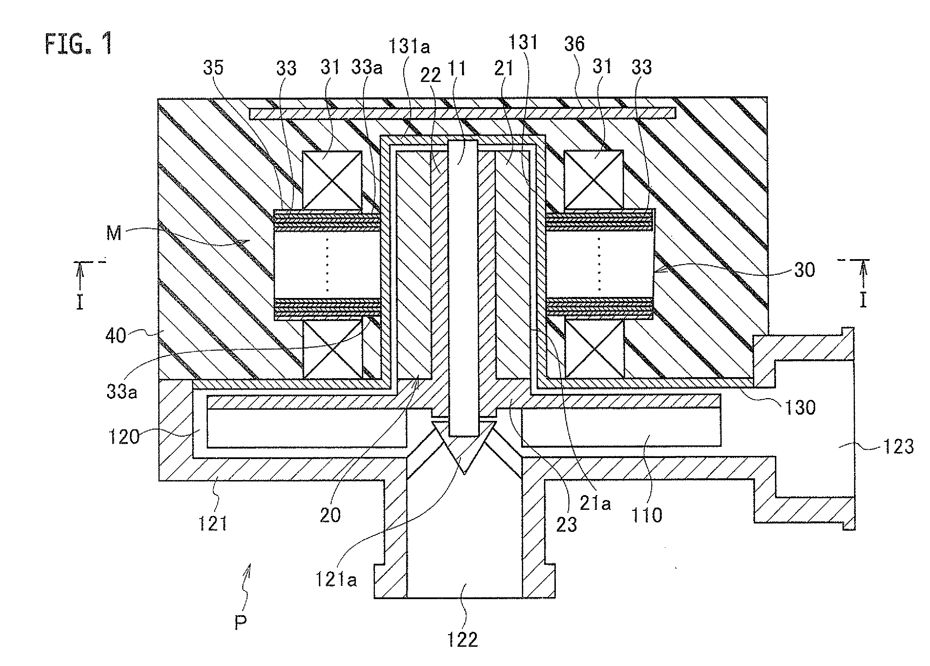

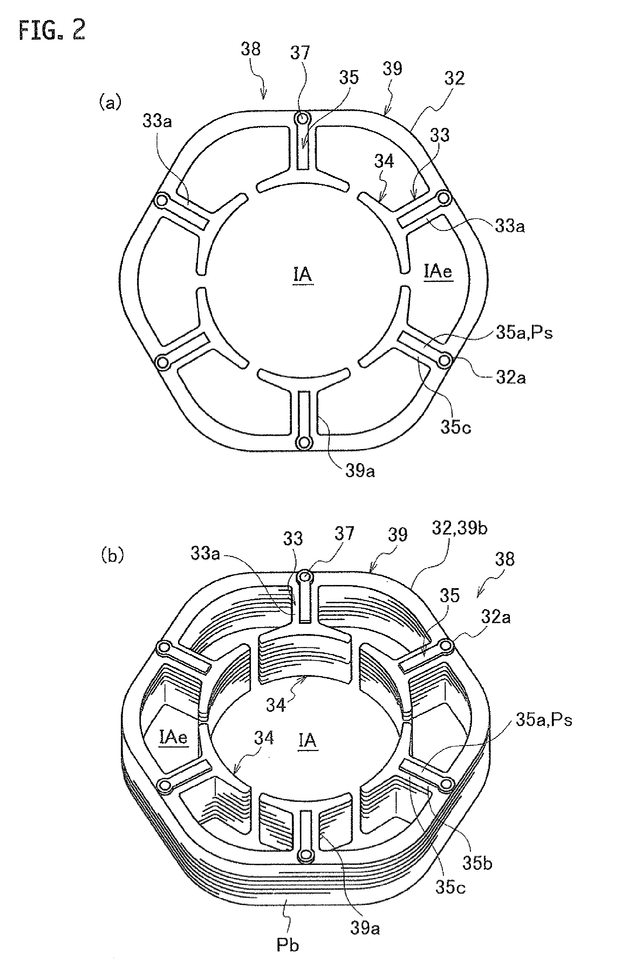

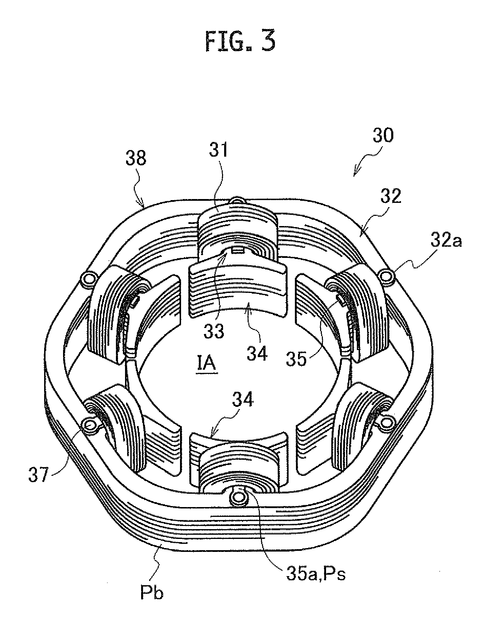

Figs. 1 to 3 show a first embodiment of the present invention. Fig. 1 shows a pump, and Figs. 2 and 3 show a motor stator structure driving the pump.

As shown in Fig. 1, a pump P substantially includes: an impeller 110 rotated by an output shaft 11 of a motor M; a pump chamber 120 accommodating the impeller 110; and a pump case 121 forming an outer wall of the pump chamber 120.

On the other hand, as shown in Figs. 1, 2(a), and 2(b), the motor M substantially includes: a rotor 20 including a permanent magnet 21; and a stator 30 including a stator core 38 on which coils 31 (coil portions) are wound. The coils 31 are energized with electricity to rotate the output shaft 11 with the rotor 20.

The pump case 121 includes: an inlet port 122 communicating with central part of the pump chamber 120; and an outlet port 123 communicating with an outer periphery of the pump chamber 120. By rotation of the impeller 110, liquid such as water sucked from the inlet port 122 is discharged through the outlet port 123.

The motor M is placed on the opposite side of the inlet port 122 against the impeller 110 and is liquid-tightly separated by a separating plate 130 from the pump chamber 120. The outer periphery of the separating plate 130 is liquid-tightly joined to the pump case 121 with a not-shown seal material interposed therebetween.

At the central part of the separating plate 130, an accommodation chamber 131 is recessed. The accommodation chamber 131 accommodates the rotor 20 so that the rotor 20 is rotatable. The rotor 20 includes the permanent magnet 21. The accommodation chamber 131 liquid-tightly separates the rotor 20 from the stator 30.

The rotor 20 includes: a cylindrical rotor body 22; the permanent magnet 21 which is provided on the sidewall of the rotor body 22 and is magnetized to have multiple poles in the circumferential direction; and a support plate 23 to which the impeller 110 is attached. In this embodiment, the rotor 20 rotates together with the output shaft 11 which is rotatably supported by a shaft supporter 121a provided for the pump case 121 and an end plate 131a of the accommodation chamber 131. In this embodiment, the stator 30 is concentrically located on the outside of the rotor 20, thus constituting the motor M of an inner rotor structure.

The stator 30 includes a yoke portion 32 located substantially around the output shaft 11 as shown in Figs. 2 and 3. The yoke portion 32 has a polygonal shape (a hexagonal shape in this embodiment). The stator 30 further includes plural tooth portions 33, magnetic pole portions 34, and coils 31 (coil portions). The tooth portions 33 protrude from the yoke portion 32 toward the permanent magnet 21. The magnetic pole portions 34 are provided at the distal ends of the tooth portions 33. The magnetic pole portions 34 are located close to a magnetized surface 21a of the permanent magnet 21 so as to face the magnetized surface 21a. The coils 31 are wound around the respective tooth portions 33.

In this embodiment, a plate material made of a soft magnetic material such as a steel plate is subjected to die-cutting to form each plate member Pb having a shape corresponding an integrated combination of the yoke portion 32, tooth portions 33, and magnetic poles 34. The plural plate members Pb (20 to 30 pieces) are stacked to form a base portion 39 of the stator core 38.

The numbers of tooth portions 33 and magnetic pole portions 34 are in accordance with the number of poles of the permanent magnet 21. In this embodiment, six tooth portions 33 are protruded radially inward from the inner periphery of the hexagonal yoke portion 32, and six magnetic pole portions 34 are provided at the ends of the tooth portions 33.

Herein, as shown in Figs. 2 (a) and 2 (b), each of the axial end portions 33a of the tooth portions 33 includes a step portion 35 so as to have a narrower circumferential width. Herein, the number of step portions 35 is equal to twice the number of tooth portions 33. In this embodiment, the step portions 35 are provided at totally 12 places.

As shown in Fig. 1, to be specific, in this embodiment each of the both axial end portions 33a and 33a of each tooth portion 33 includes the step portion 35. The step portion 35 is continuously formed to extend from one end of the corresponding tooth portion 33 to the other end thereof in a radial direction, which is a direction that the tooth portion 33 protrudes.

Each step portion 35 is composed of an upper surface 35a which becomes an axial end surface of the tooth portion 33; a pair of sidewall surfaces 35b; and a lower surface 35c which is an axial end surface of the base portion 39a of the tooth portion 33.

As described above, in this embodiment, the axial end portion 33a of each tooth portion 33 has the step portion 35. This allows gaps to be formed between the upper and lower surfaces 35a and 35c of the step portion 35 when the coil is wound on the same. Accordingly, it is possible to perform the operation of winding the coils 31 more easily than tooth portions having a general configuration (a rectangular shape) .

In this embodiment, the aforementioned step portions 35 are formed by individually placing plate members Ps that are narrower than the circumferential width of the base portions 39a on the axial end surfaces of the base portions 39a (the lower surfaces 35c) of the tooth portions 33.

As shown in Figs. 2 (a) and 2 (b), the plate members Ps have such a shape that the plate members Ps are included within an inner area IA of the hexagonal yoke portion 32. Each plate member Ps is placed at the center of the corresponding tooth portion 33 in the width direction (the circumferential direction) so as to extend in the direction that the corresponding tooth portion 33 extends (the radial direction). In addition to the central part shown in Figs. 2, the inner area IA of the yoke portion 32 includes peripheral areas IAe each surrounded by the yoke portion 32, corresponding tooth portions 33, and corresponding magnetic pole portions 34.

In this embodiment, the axial end surface of each tooth portion 33 (the upper surface 35a of each step portion 35) is flush with as at least a part of the axial end surface 32a of the yoke portion 32. In other words, in this embodiment, the plate member Ps is extended so as to overlap the yoke portion 32 and is laid on the base portion 39b of the yoke portion 32.

Each plate member Ps and the base portion 39b of the yoke portion 32 are punched to be recessed in the overlapping portion and are fit and fixed to each other by rivets 37 through the recessed portions (not shown) . Herein, the portion of each plate member Ps overlapping the base portion 39b of the yoke portion 32 is formed so as to have a substantially circular shape wider than the other part (wider in the circumferential direction). Accordingly, the periphery of each rivet 37 can ensure a certain area, thus preventing reduction in strength at processing of the recessed portions.

The plate members Ps and the base portion 39a of the yoke portion 32 are fit to each other with the rivets 37 in such a manner and therefore can be positioned and fixed easily and accurately. Moreover, the application area of the adhesive can be increased due to the recessed portions. This can increase the strength of the joint between the plate member Ps and the base portion 39b of the yoke portion 32. The shape of the overlapping portion of the plate member Ps is not limited to the substantially circular shape. The same operational effect can occur even if the plate member Ps has a polygonal shape such as a substantially rectangular shape or a substantially triangular shape.

The motor M includes a control board 36 as shown in Fig. 1. The control board 36 is configured to receive a signal from a not-shown position detection sensor detecting a rotational position of the rotor 20 and control current applied to the coils 31. The control board 36 thus controls the magnetic field generated at the magnetic pole portions 34 according to the rotational position of the rotor 20.

The stator 30 and control board 36 are placed on the opposite side of the separating plate 130 from the pump chamber 120. The stator 30 and control board 36 are fully covered with mold resin 40. The stator 30 and control board 36 are integrated with the separating plate 130 and pump case 121 with the mold resin 40 interposed to secure the strength of the entire pump P including the motor M.

With the aforementioned configuration, according to the structure of the stator 30 of the motor M of this embodiment, the axial end portion 33a of each tooth portion 33 has the step portion 35 so as to have a narrower circumferential width. It is therefore possible to facilitate the operation of winding the coils 31 and reduce the manufacturing cost. To be specific, as shown in Fig. 3, the operation of winding the coils 31 around the tooth portions 33 can be performed more easily than the operation of winding coils on tooth portions having a general configuration (a rectangular shape). Moreover, it is not necessary to use a material such as a dust core or metallic glass, unlike the conventional art. The manufacturing cost can be reduced accordingly.

The provision of the step portions 35 in such a manner can reduce the stress applied to the coils 31 which is being wound. Accordingly, it is possible to prevent an increase in resistance of the coils 31 and reduce the copper loss, thus increasing the efficiency of the motor M.

Furthermore, each step portion 35 of this embodiment is formed to extend from one end of the tooth portion 33 to the other end in the direction (the radial direction) that the tooth portion 33 protrudes. Accordingly, the coils 31 can be easily wound across each tooth portion 33.

In this embodiment, the step portions 35 are formed by providing the plate members P, which are narrower in the circumferential direction than the base portions 39a, on the axial end surfaces of the base portions 39a (lower surfaces 35c) of the tooth portions 33. Accordingly, the step portions 35 can be formed more easily than the configuration in which the step portions are formed by cutting the axial end surfaces (lower surfaces 35c).

The plate members Ps have such a shape that the plate members Ps can be formed from a material corresponding to the inner area IA which is wasted in the conventional art when the plate member Pb corresponding to an integrated combination of the yoke portion 32, tooth portions 33, and permanent magnets 34 is die-cut out from a plate member such as a steel plate. Accordingly, the plate members Ps can be formed by effectively using the left-over material in the inner area IA. In other words, the plate members Ps are configured to be formed by die cutting of the left-over part of the plate material which is subjected to die cutting to integrally form the yoke portion 32, tooth portions 33, and magnetic pole portions 34. It is therefore possible to prevent an increase in consumption of steel plate at the manufacturing process and prevent an increase in material cost, thus providing the motor M cheaply.

In this embodiment, the axial end surface of each tooth portion 33 (the upper surface 35a of each step portion 35) is formed so as to be flush with at least a part of the axial end surface 32a of the yoke portion 32. It is therefore possible to increase the cross section of the path of the magnetic flux in the yoke portion 32 and accordingly increase the efficiency of the motor M.

In this embodiment, the plate members Ps are laid so as to overlap the base portion 39b of the yoke portion 32 and are fixed by the rivets 37 at the portions thereof overlapping the base portion 39b of the yoke portion 32. Accordingly, the plate members Ps and yoke portion 32 can be positioned and fixed easily and accurately. Moreover, the application area of the adhesive can be increased due to the recessed portions, thus enhancing the strength of the joint between the plate members Ps and the yoke portion 32.

In this embodiment, by using such a structure of the stator 30 in the motor M and pump P, the costs of the motor M and pump P can be reduced.

### [First Modification]

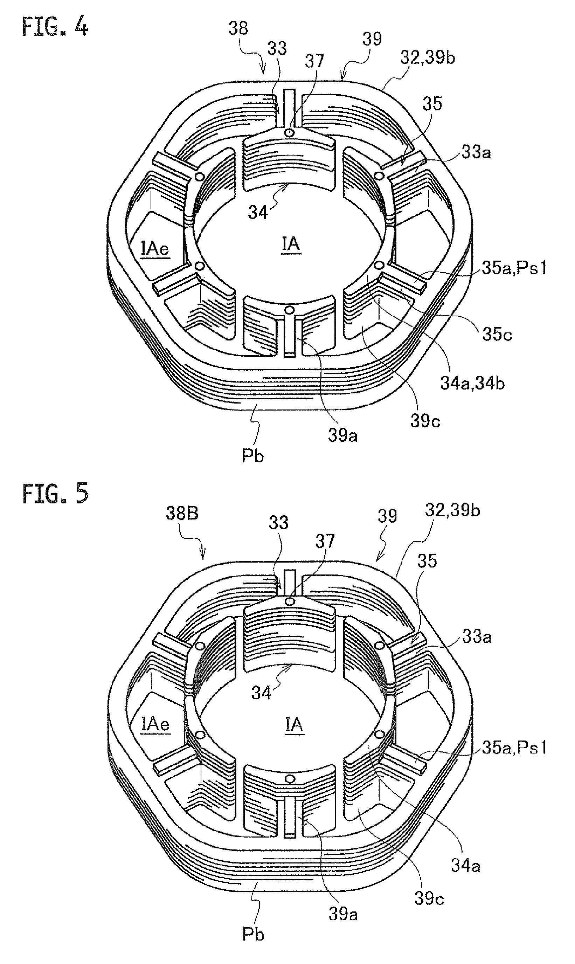

Fig. 4 is a view showing a first modification of the stator structure according to the first embodiment. This modification mainly differs from the first embodiment in that the axial end surfaces (the upper surfaces 35a) of the tooth portions 33 are formed so as to be flush with the respective axial end surfaces 34a of the magnetic poles 34.

Specifically, in the first modification, as shown in Fig. 4, each of plate members Ps1 forming the step portions 35 has a substantially T-shape in conjunction with an extension portion 34b of the corresponding magnetic pole portion 34. The plate member Ps1 is laid on the axial end surface of the base portion 39a (the lower surface 35c) of the corresponding tooth portion 33 and the axial end surface of the base portion 39c of the corresponding magnetic pole portion 34. The plate members Ps1 in this modification has such a shape that the plate members Ps1 are included within the inner area IA of the hexagonal yoke portion 32.

The plate members Ps1 are laid so as to overlap the base portions 39c of the magnetic pole portions 34 are recessed by punching at the overlapping portions and are fit and fixed by rivets 37 through the recessed portions (not shown).

With the aforementioned configuration, according to the structure of the stator 30 of this modification, similar to the aforementioned first embodiment, the operation of winding the coils 31 can be easily performed while the manufacturing cost is reduced. Moreover, the plate members Ps1 can be formed by effectively using the left over material corresponding to the inner area IA of the yoke portion 32. Accordingly, the manufacturing cost can be further reduced.

Moreover, in the first modification, the axial end surfaces (the upper surfaces 35a) of the tooth portions 33 are formed so as to be flush with the axial end surfaces 34a of the respective magnetic pole portions 34. The area of each magnetic pole portion 34 facing the rotor 20 can be therefore made larger than that of the first embodiment. The motor M can therefore produce high driving force.

Furthermore, in this modification, the plate members Ps1 are laid so as to overlap the base portions 39c of the respective magnetic pole portions 34 and are fixed by the rivets 37 at the portions overlapping the base portion 39b. It is therefore possible to increase the strength of the joint between the plate members Ps and the magnetic poles 34.

### [Second Modification]

Fig. 5 is a view showing a second modification of the stator structure according to the aforementioned first embodiment. The second modification mainly differs from the first embodiment in that the axial end surface 34a of each magnetic pole portion 34 protrudes in the axial direction from the axial end portion (the upper surface 35a) of the corresponding tooth portion 33.

As shown in FIG. 5, in other words, the magnetic pole portions 34 of second modification are made thicker in the axial direction than that of the first modification.

In the case of the second modification, for example, the substantially T-shaped plate members Ps1 according to the first modification are formed out of the left-over material corresponding to the inner area IA of the hexagonal yoke portion 32, and moreover, plate members to be laid on the magnetic pole portions of the plate members Ps1 are formed out of the left-over materials corresponding to the peripheral areas IAe. It is therefore possible to prevent an increase in consumption of steel plate and manufacture the stator core 38 with the axial thicknesses of the magnetic pole portions 34 increased.

With the aforementioned configuration, according to the structure of the stator 30 of the second modification, similar to the first embodiment and first modification, the operation of winding the coils 31 can be easily performed while the manufacturing cost is reduced.

In the second modification, moreover, the axial end surfaces 34a of the magnetic pole portions 34 protrude in the axial direction from the axial end surfaces (the upper surfaces 35a) of the respective tooth portions 33. Accordingly, the area of the magnetic pole portions 34 facing the rotor 20 can be further increased, and the driving force of the motor M can be further increased.

### [Third Modification]

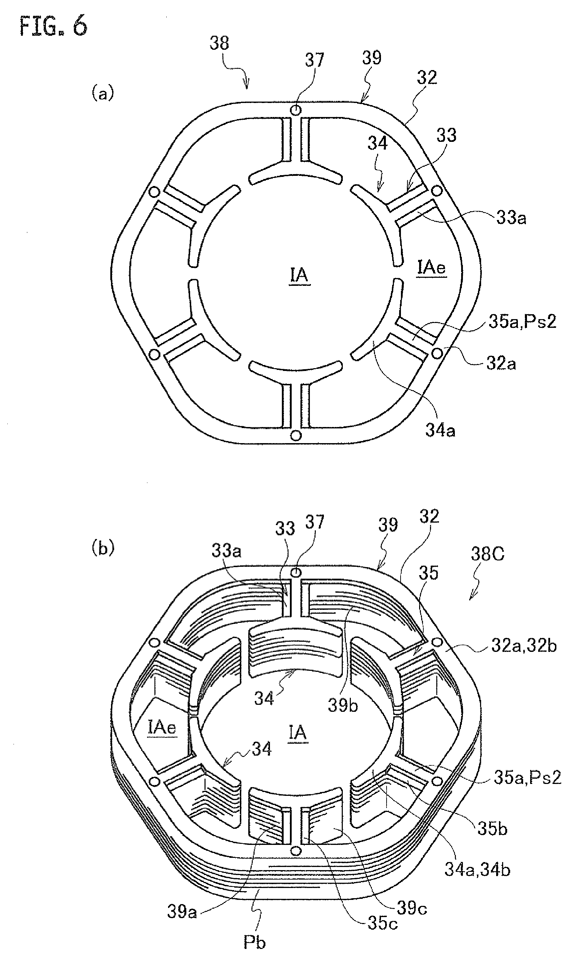

Figs. 6 are views showing a third modification of the stator structure according to the first embodiment. The third modification mainly differs from the first embodiment in that the axial end surface (the upper end surface 35a) of each tooth portion 33 is formed so as to be flush with the axial end surface 34a of the corresponding magnetic pole portion 34 and the axial end surface 32a of the yoke portion 32.

To be specific, as shown in Figs. 6(a) and 6(b), in the third modification, a plate member Ps2 forming the step portions 35 is integrally formed with the extension portions 34b of the magnetic pole portions 34 and the extension portion 32b of the yoke portion 32. The plate member Ps2 is laid on the axial end surface (not shown) of the base portion 39 of the stator core 38.

The plate member Ps2 of this modification is recessed by punching at portions overlapping the base portion 39b of the yoke portion 32 and is fit and fixed by the rivets 37 through the recessed portions (not shown).

With such a configuration, according to the structure of the stator 30, similar to the first embodiment and first and second modifications, the operation of winding the coils 31 can be easily performed while the manufacturing cost is reduced.

In the third modification, the axial end surfaces (the upper surfaces 35a) of the tooth portions 33 are formed to be flush with the axial end surfaces 34a of the respective magnetic pole portions 34 and the axial end surface 32a of the yoke portion 32. Accordingly, when producing the plate members Pb, two of the plate members Pb intended to be located at the both axial ends can be formed as plate members Ps2 such that the tooth portions 33 have smaller widths. The step portions 35 can be thus formed more easily than those in the first embodiment and first and second modifications. Moreover, the stator core 38 including the step portions 35 can be formed at the same assembly process as that of a normal stator core not including the step portions 35.

### [Second Embodiment]

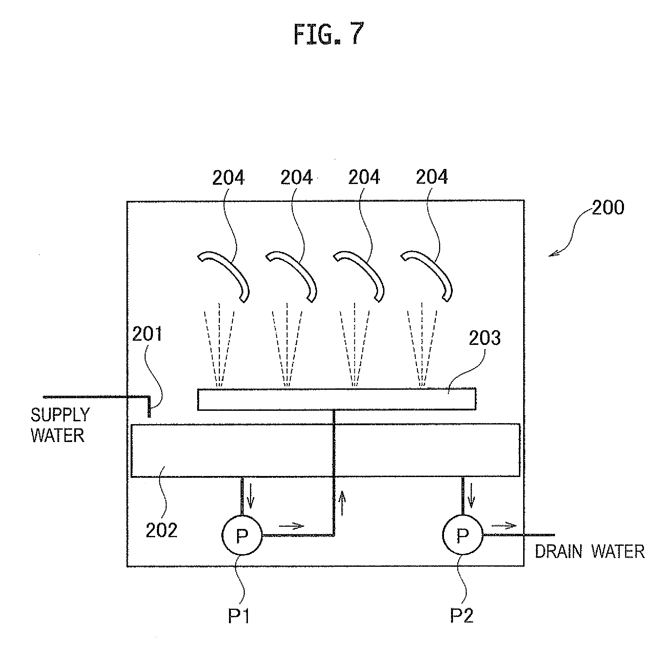

In a second embodiment, a description is given of a dishwasher as a pump-driven device including a pump to which the stator structure of the invention is applied. FIG. 7 is a view showing a dishwasher according to the second embodiment.

In a dishwasher 200, water or hot water is supplied from a water inlet 201 to a water tank 202. The water or hot water supplied to the water tank 202 is fed to a nozzle 203 by a cleaning pump P1. The water and hot water is then sprayed from the nozzle 203 to wash dishes 204 set in the dishwasher 200.

In this embodiment, the water or hot water falls down after washing is then reserved in the water tank 202. The water or hot water is then fed to the nozzle 203 by the cleaning pump P1 again. After such circulation cleaning for a predetermined time, the cleaning pump P1 is stopped, and the drainage pump P2 is activated. The water or hot water in the water tank 202 is discharged.

Next, the water or hot water is supplied through the water inlet 201 to the water tank 202 again, and the cleaning pump P1 is operated for a predetermined time for rinsing. Thereafter, the cleaning pump P1 is stopped, and the drainage pump P2 is activated. The water or hot water in the water tank 202 is therefore discharged. The above operation is repeated several times for rinsing, thus cleaning the dishes 204 set in the dishwasher 200.

Herein, in this embodiment, the aforementioned cleaning and drainage pumps P1 and P2 are each composed of the pump P of the first embodiment. In the dishwasher 200 of the second embodiment, the use of the pump P of the first embodiment for the cleaning and drainage pumps P1 and P2 can reduce the cost of the dishwasher 200.

In this embodiment, each motor used in the pumps P1 and P2 may be the motor M to which the structure of the stator 30 according to the first to third modifications can be applied. The motor M can provide a similar effect also in this case.

### [Third Embodiment]

In a third embodiment, a description is given of a water heater unit as the pump-driven device including the pump to which the stator structure of the invention is applied. FIG. 10 is a view showing a water heater unit according to the third embodiment. The water heater unit 300 is described as a water heater system using a heat pump which uses CO₂ as a refrigerant as an example. The heat pump is capable of operating with low power and is eco-friendly.

Specifically, the water heater unit 300 includes a heat pump 301, a water tank unit 302, a bath 303, a floor heater 304, a reheating heat exchanger 305, a heater heat exchanger 306, and the like. The water heater unit 300 includes a hot water faucet 307 for a kitchen or bathroom and an auxiliary tank 308 reserving hot water and further includes a pressure reducing valve 310 on the downstream of a water inlet 309. The floor heater 304 is provided with a heat valve 311. Furthermore, plural mixing valves 312 and safety valves 313 are provided for the pipes.

By driving plural pumps P4, P5, P6, P7, and P8 while controlling the aforementioned valves 310, 311, 312, and 313, water or hot water can be supplied to the bath 303, the hot water faucet 307 in a kitchen or bathroom, and the like at a desired temperature and a desired flow rate.

Herein, in this embodiment, each of the above pumps P4 to P8 is composed of the pump P to which the structure of the stator 30 of the first embodiment is applied. Since the water heater unit 300 of the third embodiment includes the pumps P3 to P8 each composed of the pumps P of the first embodiment, the cost of the water heater unit 300 can be reduced.

In this embodiment, the motor used in each of the pumps P4 to P8 may be the motor M to which the structure of the stator 30 according to the first to third modifications is applied. The motor M can provide the same effect also in this case.

The third embodiment is not limited to the application to the water heater unit 300 as an electric water heater system using the aforementioned heat pump and can be applied to a gas water heater system or a cogeneration system. The use of the above-described pump P can provide the same effect.

### [Fourth Embodiment]

In a fourth embodiment, a description is given of a washing machine as a pump-driven device including the pump to which the stator structure of the invention is applied. FIG. 11 is a view showing a washing machine according to the fourth embodiment.

In the washing machine 400, a washing tub 401 is controlled and rotated by a not-shown motor. Clothes and the like are washed by rotating the washing tub 401 while circulating water in the washing machine 400 by a circulation pump P3.

Herein, in this embodiment, the aforementioned circulation pump P3 is composed of the pump P to which the structure of the stator 30 of the first embodiment is applied. By using the pump P of the first embodiment to constitute the circulation pump P3 in the washing machine 400 of the fourth embodiment in such a manner, the cost of the washing machine 400 can be reduced.

In this embodiment, the motor used for the pump P3 can be the motor M to which the structure of the stator 30 according to the first to third modifications is applied. The motor M can provide the same effect also in this case.

Hereinabove, the preferred embodiments of the invention are described. However, the invention is not limited to the above embodiments and can be variously modified.

For example, the aforementioned embodiments are described using the example of the pump including the motor of an inner rotor structure as a driving source. However, the invention is not limited to the inner rotor structure but can be applied to the motor structure of an outer rotor structure. In such a case, each tooth portion radially protrudes from the outer periphery of the yoke portion toward the permanent magnet while the each tooth portion radially protrudes from the inner periphery of the yoke portion toward the permanent magnet in the above embodiments.

Moreover, in the above embodiments, the yoke portion has a hexagonal shape but is not limited to the same. The yoke portion may have an annular shape or a different polygonal shape.

## Claims

1. A motor stator structure (30), comprising:
a yoke portion (32) having an annular or polygonal shape located substantially around an output shaft (11);
a tooth portion (33) protruding radially from inner or outer periphery of the yoke portion (32);
a magnetic pole portion (34) provided at an end of the tooth portion (33); and
a coil portion (31) wound around the tooth portion (33), wherein
an axial end portion (33a) of the tooth portion (33) has a step portion (35) which has a narrower width in the circumferential direction.

2. The motor stator structure (30) according to claim 1, wherein the step portion (35) is formed to extend from one end of the tooth portion (33) to the other end in the direction that the tooth portion extends.

3. The motor stator structure (30) according to claim 1 or 2, wherein the axial end surface (35a) of the tooth portion (33) is flush with at least a part of an axial end surface (32a) of the yoke portion (32).

4. The motor stator structure (30) according to any one of claims 1 to 3, wherein the axial end surface (35a) of the tooth portion (33) is flush with an axial end surface (34a) of the magnetic pole portion (34).

5. The motor stator structure (30) according to any one of claims 1 to 3, wherein the axial end surface (34a) of the magnetic pole portion (34) protrudes in the axial direction from the axial end surface (35a) of the tooth portion (33).

6. The motor stator structure (30) according to any one of claims 1 to 5, wherein
the step portion (35) is formed by providing a plate member (Ps) that is narrower than the circumferential width of a base portion (39a) of the tooth portion (33) on an axial end surface (35c) of the base portion (39a).

7. The motor stator structure (30) according to claim 6, wherein
the plate member (Ps) is provided to overlap a base portion (39b) of the yoke portion (32) or a base portion (39c) of the magnetic pole portion (34) and is fixed with a rivet (37) at a portion overlapping the base portion (39b) of the yoke portion (32) or the base portion (39c) of the magnetic pole portion (34) .

8. The motor stator structure (30) according to claim 6 or 7, wherein the plate member (Ps) is formed by die cutting a left-over part of a plate from which the yoke portion (32), tooth portion (33), and magnetic pole portion (34) are integrally die-cut out.

9. A motor (M) including the motor stator structure (30) according to any one of claims 1 to 8.

10. A pump (P) including the motor (M) of claim 9 as a driving source.

11. A pump-driven device (200,300,400) including the pump (P) of claim 10.
